**Europäisches Patentamt**

**European Patent Office**

**Office européen des brevets**

(11) Veröffentlichungsnummer : **0 028 323**
**B1**

(12) **EUROPÄISCHE PATENTSCHRIFT**

(45) Veröffentlichungstag der Patentschrift :
13.07.83

(51) Int. Cl.³ : **F 16 B 39/286**, F 16 B   7/08

(21) Anmeldenummer : **80106153.2**

(22) Anmeldetag : **10.10.80**

(54) **Halteclip zur lösbaren Befestigung von Funktionselementen auf einer Trägerplatte mittels Gewindebolzen.**

(30) Priorität : **06.11.79 DE 2944748**

(43) Veröffentlichungstag der Anmeldung :
**13.05.81 Patentblatt 81/19**

(45) Bekanntmachung des Hinweises auf die Patenterteilung : **13.07.83 Patentblatt 83/28**

(84) Benannte Vertragsstaaten :
**DE FR GB IT NL SE**

(56) Entgegenhaltungen :
**CH A 397 341**
**DE A 1 475 035**
**DE U 1 966 002**
**DE U 1 993 665**
**FR A 685 357**
**FR A 1 544 758**
**GB A 1 438 758**

(73) Patentinhaber : **Firma A. Raymond**
**Teichstrasse 57**
**D-7850 Lörrach (DE)**

(72) Erfinder : **Wölker, Günter**
**Hartmattenstrasse 107**
**D-7850 Lörrach (DE)**

Halteclip zur lösbaren Befestigung von Funktionselementen auf einer Trägerplatte mittels Gewindebolzen

Die Erfindung betrifft einen Halteclip aus hartelastischem Kunststoff zur lösbaren Befestigung von Funktionselementen oder Bauteilen auf einer Trägerplatte mittels auf dieser starr befestigter Gewindebolzen. Der Clip besteht hierbei aus die Funktionselemente mit elastischen Federarmen umgreifenden Halteorganen sowie einem Befestigungsloch mit einem gegenüber dem Außendurchmesser des Gewindebolzens etwas kleineren Innendurchmesser, wobei sich der Gewindebolzen in das Befestigungsloch durch einen Hammer oder andere Kraftmittel eintreiben läßt.

Bei der Befestigung von Funktionselementen wie beispielsweise Bremsleitungen an der Karosseriewand eines Kraftfahrzeugs kommt es darauf an, daß sich der Halteclip schnell und dauerhaft an dem Gewindebolzen befestigen und im Bedarfsfall auch leicht wieder losdrehen läßt. Es muß aber auch gewährleistet sein, daß sich der Clip bei Erschütterungen oder sonstigen äußeren Krafteinwirkungen nicht von selbst wieder lösen kann. Insbesondere die letztgenannte Forderung wird von einem bereits verwendeten Halteclip mit glattwandigem Befestigungsloch nicht mit der in der Praxis erforderlichen Sicherheit erfüllt, weil die Innenwand des Befestigungsloches beim Aufdrücken auf den Gewindebolzen von den scharfen Gewindekanten abgeschabt wird und dadurch die Hafteigenschaften des Clips erheblich beeinträchtigt werden. Aus diesem Grunde kann ein einmal losgedrehter Clip nicht ohne Bedenken ein weiteres Mal verwendet werden. Zudem ist dieser Clip aus entformungstechnischen Gründen relativ teuer in der Herstellung, weil durch die unterschiedliche Ausrichtung des Befestigungsloches zu den Halteräumen ein zusätzlicher Entformungsschieber notwendig ist.

Der Erfindung liegt daher die Aufgabe zugrunde, das Befestigungsloch des eingangs erwähnten Halteclips so zu gestalten, daß dessen Hafteigenschaften auf dem Gewindebolzen — auch unter Berücksichtigung der unterschiedlich starken Beschichtung des Gewindebolzens mit Farblack und aufgeschäumtem Dämmmaterial — verbessert werden, ohne daß die vorgenannten Montage- und Demontageeigenschaften in irgendeiner Weise beeinträchtigt werden. Dabei sollen die Herstellung des Befestigungsloches vereinfacht und damit die Herstellungskosten gesenkt werden. Ferner soll erreicht werden, daß der Clip auch nach der Demontage ohne Bedenken wieder verwendet werden kann.

Diese Aufgaben werden durch die in den Ansprüchen gekennzeichnete Erfindung gelöst. Die Vorteile der erfindungsgemäßen Maßnahmen sind im wesentlichen darin zu sehen, daß die zwischen den Hohlräumen verbleibenden halbrunden Wandteile beim Aufdrücken des Clips auf den Gewindebolzen etwas elastisch nachgeben, so daß diese weniger abgeschabt werden, als dies bei einer geschlossenen Lochwand der Fall ist.

Außerdem greifen einige Wandbereiche beim Zurückfedern in die Gewindeflanken ein und sorgen so für eine formschlüssige Verbindung, wodurch die Haltekraft des Clips zusätzlich erhöht wird. Im übrigen ergibt sich durch die Hohlräume nicht nur eine Materialeinsparung, sondern es wird auch gleichzeitig das Werkzeug erheblich einfacher und billiger, weil der sonst erforderliche Entformungsschieber für das Befestigungsloch entfällt. Die zur Erzeugung der Hohlräume erforderlichen Formteile können nämlich in die gleiche Richtung auseinandergezogen werden wie die Formteile für die Halterinnen.

Die Merkmale der Erfindung und deren technische Vorteile ergeben sich auch aus der nachfolgenden Beschreibung eines Ausführungsbeispiels in Verbindung mit der Zeichnung. Es zeigt :

Figur 1 eine Seitenansicht des Halteclips in vergrößertem Maßstab,

Figur 2 eine Vorderansicht zu Figur 1,

Figur 3 eine Draufsicht hierzu,

Figur 4 einen Schnitt durch das Befestigungsloch gemäß IV-IV in Figur 1,

Figur 5 einen Halteclip in normaler Größe vor dem Aufdrücken auf einen Gewindebolzen und

Figur 6 den Halteclip auf dem Gewindebolzen eingedrückt mit zwei montierten Bremsleitungen.

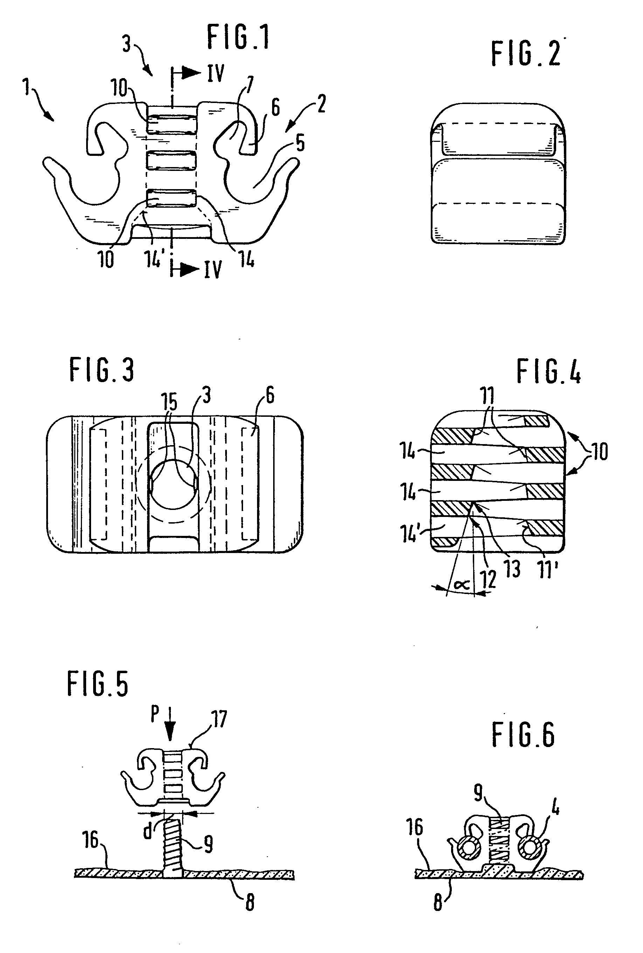

Der aus hartelastischem Kunststoff hergestellte Halteclip besteht im wesentlichen aus zwei Halteorganen 1 und 2 und einem im Zentrum des Clips angeordneten Befestigungsloch 3, mit welchem der Clip auf einen an einer Trägerplatte 8 angeschweißten oder sonstwie befestigten Gewindebolzen 9 durch Krafteinwirkung in Richtung des Pfeiles « P » aufgedrückt oder durch Hammerschläge auf die ebene Fläche 17 des Clips aufgetrieben wird (vgl. Fig. 5 und 6).

Die Halteorgane 1 und 2 sind zur Aufnahme und Halterung von vorzugsweise zylindrischen Funktionsteilen 4 wie Bremsleitungen, Rohren, Kabel oder dergleichen mit Rinnen 5 und elastischen Federarmen 6 ausgestattet, welche beim Eindrücken der Teile 4 in die Rinne 5 seitlich in eine Aussparung 7 ausweichen und dann wieder zurückfedern, um dann das Funktionsteil 4 von oben abzustützen.

Die Innenwand des Befestigungslochs 3 ist, wie aus Figur 4 ersichtlich, durch wechselseitig übereinander angeordnete flache Hohlräume 10 von etwa der Breite des Befestigungsloches 3 unterbrochen, so daß die Innenwand des Lochs 3 durch zwischen den Hohlräumen 10 verbleibende halbrunde Wandteile 11 gebildet wird.

Diese Wandteile 11 sind — in Eindrückrichtung des Clips gesehen — nach außen derart abgeschrägt, daß jeweils die lichte Weite zwischen den unteren Kanten 12 etwas größer und die der oberen nach innen vorstehenden Kanten 13 etwas kleiner als der Außendurchmesser « d » des Gewindebolzens 9 ist, und zwar so viel kleiner, daß sich der Clip mit vertretbarem Kraftaufwand auf den Gewindebolzen 9 aufdrücken läßt. Hierbei hat sich gezeigt, daß eine gegenüber dem Außendurchmesser des Gewindebolzens 9 zwischen 5 % und 15 % kleinere lichte Weite sowohl zum Aufdrücken bzw. Aufschlagen als auch zum Halten des Clips am günstigsten ist.

Weiterhin ist es vorteilhaft, wenn die verbleibenden halbrunden Lochwandteile 11 jeweils in ihrem mittleren Bogenbereich um etwa 10° bis 15° zur Lochachse geneigt ausgebildet sind und der Neigungswinkel « α » vom mittleren Bogenbereich bis zum Übergang in die Hohlraumwand 14 stetig bis auf 0° abnimmt, wobei der Wandabstand in diesem Bereich etwa dem Außendurchmesser des Gewindebolzens 9 entspricht.

Ferner ist zum leichteren Einführen des Gewindebolzens 9 in das Befestigungsloch 3 vorgesehen, daß die unterste Lochwand 11' mit den daran anschließenden Hohlraumwänden 14' zur Bildung eines Einführtrichters um etwa 30° bis 45° nach außen geneigt ist. Die sich dadurch dort ergebende Verbreiterung des Befestigungsloches 3 wie auch der anschließende Hohlraum 10 bieten den Vorteil, daß ein auf die Trägerplatte 8 aufgeschäumter Dämmstoff 16 beim Auftreiben des Clips in diesen freien Raum ausweichen kann.

Die Herstellung des Halteclips erfolgt zweckmäßigerweise mit einer in der Zeichnung nicht dargestellten zweiteiligen Gießform, bei der die Hohlräume 10 und das Befestigungsloch 3 durch an den gegenüberliegenden Innenwanden der Form angebrachte Formlamellen erzeugt werden, deren Enden halbkreisförmig ausgebildet sind und die beim Schließen der beiden Formhälften reißverschlußartig ineinandergreifen. Zum leichteren Entformen der Formlamellen sollten die sich ineinanderschiebenden Enden in Eingriffrichtung konisch abgeschrägt sein. Außerdem ist es zweckmäßig, wenn die zueinander parallelen Kanten der Formlamellen bis in den vorderen Halbkreisbereich auslaufend abgefast bzw. abgerundet sind. Dadurch bilden sich im Befestigungsloch 3 des Clips in das Lochinnere etwas vorstehende Gießansätze 15, welche einen zusätzlichen Halteeffekt bewirken.

Es sei noch vermerkt, daß der Clip aufgrund der erfindungsgemäßen Ausbildung des Befestigungsloches nicht nur auf Gewindebolzen, sondern auch auf zylindrische Bolzen mit glatter, aufgerauhter oder feingerillter Oberfläche befestigt werden kann, wenn es nicht darauf ankommt, den Clip leicht wieder lösen zu können.

## Ansprüche

1. Halteclip aus hartelastischem Kunststoff zur lösbaren Befestigung von Funktionselementen (4) oder Bauteilen auf einer Trägerplatte (8) mittels auf dieser starr befestigter Gewindebolzen (9), bestehend aus die Funktionselemente (4) mit elastischen Federarmen (6) umgreifenden Halteorganen (1, 2) sowie einem Befestigungsloch (3) mit einem gegenüber dem Außendurchmesser des Gewindebolzens (9) etwas kleineren Innendurchmesser, wobei der Gewindebolzen (9) in das Befestigungsloch (3) durch Krafteinwirkung eintreibbar ist, dadurch gekennzeichnet, daß die Innenwand des Befestigungsloches (3) durch wechselseitig übereinander angeordnete, sich bis zur Außenwand des Clips erstreckende flache Hohlräume (10) von der Breite des Lochdurchmessers unterbrochen ist, wobei die Hohlraumwände (14) parallel zu den Rinnen (5) der Halteorgane (1 und 2) verlaufen.

2. Halteclip nach Anspruch 1, dadurch gekennzeichnet, daß die zwischen den Hohlräumen (10) verbleibenden halbrunden Lochwandteile (11) — in Eindrückrichtung des Clips gesehen — nach außen leicht abgeschrägt sind, wobei die lichte Weite zwischen den nach innen vorstehenden Wandkanten (13) 5 % bis 15 % kleiner ist als der Außendurchmesser des Gewindebolzens (9).

3. Halteclip nach Anspruch 2, dadurch gekennzeichnet, daß die verbleibenden halbrunden Lochwandteile (11) jeweils in ihrem mittleren Bogenbereich um etwa 10° bis 15° zur Lochachse geneigt sind und der Neigungswinkel « α » vom mittleren Bogenbereich bis zum Übergang in die Hohlraumwand (14) stetig bis auf 0° abnimmt, wobei der Wandabstand in diesem Bereich etwa dem Außendurchmesser des Gewindebolzens (9) entspricht.

4. Halteclip nach einem der Ansprüche 1 bis 3, dadurch gekennzeichnet, daß die unterste Lochwand (11') mit den daran anschließenden Hohlraumwänden (14') zur Bildung eines Einführtrichters um etwa 30° bis 45° nach außen geneigt ist.

## Claims

1. A holding clip comprising tough resilient plastics material for releasably fixing functional elements (4) or components to a carrier plate (8) by means of screwthreaded pins (9) rigidly fixed thereon, comprising holding members (1, 2) which engage around the functional elements (4) with resilient spring arms (6), and a fixing hole (3) whose diameter is somewhat smaller than the outside diameter of the screwthreaded pin, wherein the screwthreaded pin (9) can be forcibly driven into the fixing hole (3), characterised in that the internal wall of the fixing hole (3) is interrupted by shallow cavities (10), of the width of the diameter of the hole, the cavities being arranged alternately one above the other and extending to the outside wall of the clip, wherein the walls (14) of the cavities extend parallel to the grooves (5) of the holding members (1 and 2).

2. A holding clip according to claim 1, characterised in that the semicircular portions (11) of the wall of the hole, which remain between the cavities (10), are inclined slightly outwardly, as viewed in the direction in which the clip is pressed into position, wherein the internal width between the inwardly projecting wall edges (13) is 5 % to 15 % smaller than the outside diameter of the screwthreaded pin (9).

3. A holding clip according to claim 2, characterised in that the remaining semicircular portions (11) of the wall of the hole are each inclined relative to the axis of the hole at about 10° to 15°, in the middle region of their arcuate configuration, and the angle of inclination $\alpha$ steadily falls to 0° from the middle region of their arcuate configuration to their transition into the wall (14) of the cavity, wherein the wall spacing in that region approximately corresponds to the outside diameter of the screwthreaded pin (9).

4. A holding clip according to one of claims 1 to 3, characterised in that the lowermost wall (11') of the hole is inclined outwardly at about 30° to 45°, with the adjoining cavity walls (14'), to form an insertion funnel configuration.

**Revendications**

1. Agrafe de retenue en matière plastique à cédage élastique dur, pour la fixation, avec possibilité de démontage ultérieur, d'éléments fonctionnels (4) ou de composants sur une plaque support (8), par l'intermédiaire de boulons filetés (9) fixés de façon rigide sur cette dernière, se composant d'organes de retenue (1, 2) enserrant les éléments fonctionnels (4) à fixer au moyen de bars élastiques (6), ainsi qu'un trou de fixation (3), dont le diamètre intérieur est un peu plus petit que le diamètre extérieur du boulon fileté (9), ce dernier étant emmanché dans le trou de fixation (9) en exerçant un effort sur l'agrafe, se caractérisant par le fait que la paroi intérieure du trou de fixation (3) est coupée par des évidements plats (10) qui vont jusqu'à la paroi extérieure de l'agrafe l'un sur l'autre et alternativement décalés dans les sens opposés, de la largeur du trou de fixation (3), les parois correspondant aux évidements (14) étant en l'occurence parallèles aux gorges (5) des organes de retenue (1) et (2).

2. Agrafe de retenue suivant la revendication 1, se caractérisant par le fait que les éléments de paroi de forme semicirculaire restants (11) du trou qui séparent les uns des autres les évidements (10) (vus dans le sens de l'emmanchement de l'agrafe), sont légèrement inclinés vers l'extérieur, l'intervalle libre séparant les bords de paroi (13) faisant saillie vers l'intérieur étant en l'occurence de 5 % à 15 % inférieur à la valeur du diamètre extérieur du boulon fileté (9).

3. Agrafe de retenue suivant la revendication 2, se caractérisant par le fait que les éléments de paroi de forme semicirculaire restants (11) sont respectivement inclinés, au niveau de leur zone de cintrage médiane, dans une proportion de 10° à 15° par rapport à l'axe du trou, et que l'angle d'inclinaison « alpha » diminue du niveau de la zone de cintrage médiane jusqu'au passage à la paroi d'évidement (14) de façon constante jusqu'à atteindre une valeur nulle, la distance entre les parois dans cette zone correspondant alors en l'occurrence sensiblement au diamètre extérieur du boulon fileté (9).

4. Agrafe de retenue suivant une quelconque des revendications 1 à 3, se caractérisant par le fait que l'élément de paroi inférieur extrême (11') est, avec les parois latérales de l'évidement (14') qui s'y raccordent incliné vers l'extérieur dans une proportion de 30° à 45° de manière à constituer ainsi une sorte d'entonnoir d'introduction.

FIG.1

FIG.2

FIG.3

FIG.4

FIG.5

FIG.6

1